# EUROPEAN PATENT APPLICATION

(11) **EP 1 528 713 A2**
(43) Date of publication of application: **04.05.2005**
(21) Application number: 04024132.5
(22) Date of filing: 09.10.2004
(51) Int. Cl.: H04L 12/26

(54) **Remote monitoring of graphical telecommunications terminals**

(30) Priority: 31.10.2003 US 699409
(71) Applicant: ALCATEL, 75008 Paris (FR)
(72) Inventor: Babu, Mani, Murphy, TX 75094 (US); Rao, Kashipati G., Plano, TX 75025 (US); Suhail, Atiya, Plano, TX 75025 (US)
(74) Representative: Dreiss, Fuhlendorf, Steimle & Becker

(57) **Abstract**

A communications system (8) includes a data network (10) and one or more telecommunication terminals (32) coupled to the network for communicating by sending and receiving packetized data over the network (10). A monitoring terminal (32b) can monitor user activity on one or more of the telecommunication terminals (32a). A graphical proxy server (34), in communication with the one or more telecommunication terminals (32) and with the monitoring terminal (32b), sends graphical commands to implement the graphical interfaces on the telecommunication terminals (32) and sends graphical commands to the monitoring terminal (32b) indicative of actions taken on one or more of the telecommunication terminals (32a).

## Description

### Background of the Invention

### 1. TECHNICAL FIELD

This invention relates in general to telecommunications and, more particularly, to a digital communications network.

### 2. DESCRIPTION OF THE RELATED ART

Over the last two decades, communications capabilities have increased dramatically. Current communication networks are now capable of providing sophisticated features such as multiple party conferencing with multiple private sidebar conversations, programmable "follow-me" calling, and sophisticated voice mail options.

As telecommunications has become more powerful, the ability to misuse the power of the telecommunications system has become more evident. One example of misuse would be the ability of minors to access adult-only sites. Another example would be the use of the telecommunications system to perpetrate a crime. While in certain cases, line tapping is available to law enforcement agencies, no such capability is available to parents and business owners who may need assurance that there telephonic equipment is not being used for illicit or immoral purposes.

Therefore, a need has arisen for a method and apparatus allowing monitoring of the use of a telecommunication device.

### Brief Summary of the Invention

In the present invention, a communications system includes a data network and a monitored terminal coupled to the network for communicating by sending and receiving data over the network. A monitoring terminal monitors user activity on the monitored terminal. A graphical proxy server in communication with the monitored terminal and with the monitoring terminal sends graphical commands to implement a graphical interface on the monitored terminal and sends graphical commands to the monitoring terminal indicative of actions taken on the monitored terminal.

### Brief Description of the Several Views of the Drawings

For a more complete understanding of the present invention, and the advantages thereof, reference is now made to the following descriptions taken in conjunction with the accompanying drawings, in which:

Figure 1 illustrates a block diagram of a VOIP network;

Figure 2 illustrates a basic block diagram of a system for remote monitoring of a communication session;

Figure 3 illustrates a block diagram of a graphical proxy server;

Figure 4 illustrates a block diagram of terminal controller used in the graphical proxy and it interaction with other components of the graphical proxy;

Figure 5 illustrates a block diagram of a graphical client of a graphical terminal associated with a graphical proxy server.

Figure 6 illustrates the steps for registration/log-in;

Figure 7 illustrates a call flow for an outgoing call from a terminal;

Figure 8 illustrate a call flow for putting a caller on hold; and

Figure 9 illustrates a flow chart describing operation of the block diagram of Figure 3 in a monitoring mode.

### Detailed Description of the Invention

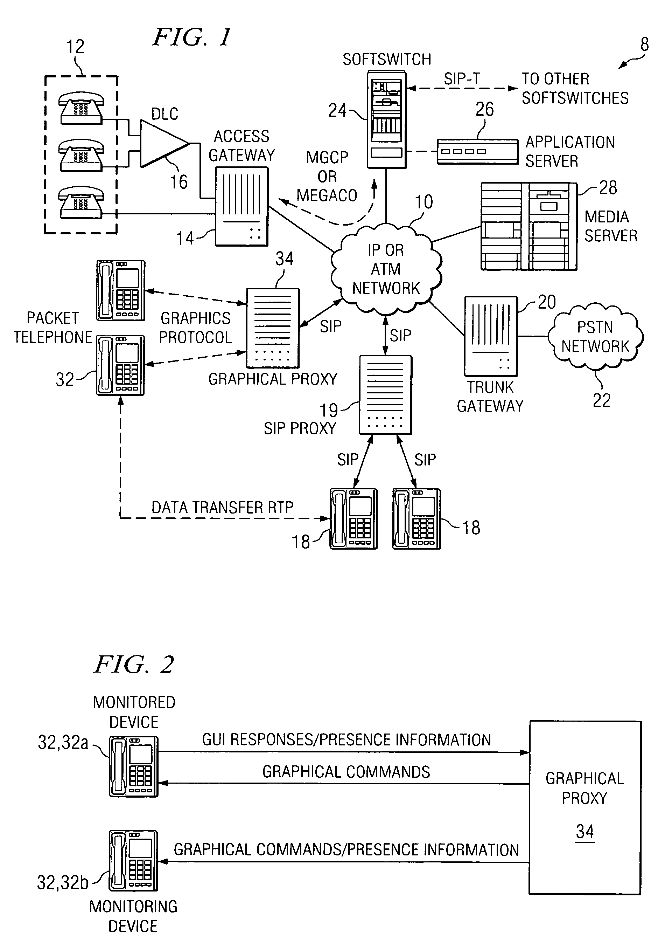

The present invention is best understood in relation to Figures 1 through 9 of the drawings, like numerals being used for like elements of the various drawings.

Figure 1 illustrates a block diagram of a VOIP network 8 of the type described in U.S. Ser. No. 10/092,075, entitled "Graphical Telephone System", filed March 6, 2002 to Ransom, which is incorporated by reference herein. A packet-based network 10 is the main carrier of telecommunications traffic. The network 10 could use, for example, IP (Internet Protocol) or ATM (Asynchronous Transfer Mode). Legacy telephone equipment 12 (i.e., present-day telephones and similar equipment compatible with the public switched telephone network) is coupled to the network 10 via access gateways 14, either directly or through digital loop carriers 16. The access gateways 14 interface between the analog legacy telephone equipment and the network 10, using a protocol such as MGCP (Media Gateway Control Protocol) or MEGACO (H.248).

SIP telephones 18 (or other VOIP phones, such as H.323 phones) and SIP proxy server 19 can be connected directly to the network 10. SIP telephones 18 are intelligent devices that contain processors that are independent from a central switching location (i.e., a central office) and have one or more processors to create, modify and terminate communication sessions.

A trunk gateway 20 provides an interface between the packet network 10 and the PSTN (public switched telephone network) 22.

Softswitches 24, application servers 26 and media servers 28 are instrumental in providing advanced functions. A softswitch 24 is a software-based entity that provides call control functionality. A softswitch 24 may support multiple packet-based protocols, such as SIP, MGCP, MEGACO and multiple telephony and data protocols, such as CAS, INAP, ISDN, SS7, TCAP, TCP/IP. A softswitch 24 may interface with the PSTN 22 through various gateways.

In a SIP environment, a softswitch 24 may act as a SIP proxy server for name resolution and user location - similar to a domain server. In this way, a name (similar to a domain name) can be dynamically associated with a current IP address. Also, a SIP proxy server may be used for redirection of packets, where the proxy server "pretends" to the other network elements that it is the user's SIP terminal and forwards messages to the real SIP terminal (or conceivably to another SIP Proxy).

Application servers 26 provide services that may result in termination of a call, such as voice mail, conference bridging, pre-paid calling, or delivering services and information to an end user. An application server can be coupled to other data networks, such as the Internet, to gain access to information systems.

Media servers 26 provide media processing under control of a media gateway controller (not shown). The media server 26 could provide, for example, voice storage and responses for voice mail, or video streams.

Graphical terminals (described below) 32 communicate with an associated graphical proxy 34 with other SIP phones (and similar VOIP devices) over the network 10 using a graphics protocol between the graphics terminals 32 and the graphical proxy 34, where the graphics protocol controls the GUI of the graphics terminal and provides control information to the graphical proxy 34 regarding a user's actions with the packet phone's GUI. The graphical proxy 34 communicates with other devices over the network using SIP (or similar protocol).

U.S. Ser. No. 10/092,075, referenced above, describes the use of a graphical proxy 34 to control the GUI of a "dumb" packet phone, rather than an "intelligent" SIP phone. Responsive to actions by the user, the graphical proxy sends commands to the dumb packet phone to control the operation of the user interface, as opposed to the SIP phone controlling the user interface internally. This provides a significant advantage over the prior art, since the network provider could control the GUI of the packet telephones to add value to its network services and can improve the consistency of the user interface between phones.

A large class of computing devices could function as a graphics terminal 32, even though these devices do not have the client communication stack normally associated with a packet phone. Mainly, a graphics terminal 32 includes sound and display capabilities, with network communications functionality. Devices of this type would include personal computers (including desktop and portable computers), personal digital assistants (PDAs, including pocket PCs) and so on. It is assumed that these devices include browser software with pluggable and downloadable MACROMEDIA FLASH (or other interactive graphics design software) and have a TCP/IP and RTP (Real-time Transport Protocol) stack.

Figure 2 illustrates a basic block diagram of a system for remote monitoring of a communication session. In the depicted scenario, a monitored terminal 32a is coupled to the graphical proxy 34 along with a monitoring terminal 32b. It is assumed that the monitoring terminal 32b has registered with the graphical proxy 34 to allow monitoring of the monitored terminal 32a. With law enforcement, registration would be made through the service provider that controls the graphical proxy 34. In other cases, the owner of the monitored terminal 32a (for example, a parent or business owner) could register directly with the graphical proxy 34.

In operation, when there is activity on the graphical interface of the monitored terminal 32a, the graphical proxy 34 sends graphical commands to both the monitored terminal 32a and the monitoring terminal 32b. From the viewpoint of the user of the monitored terminal 34a, operation of the telephone is normal, and the user interacts with the user interface to operate the device 32a to create and terminate connections with other devices in the telecommunications network 8. Additionally, the monitored terminal 32a may send presence information, discussed below, to the graphical proxy 34.

The monitoring terminal 32b, on the other hand, receives the same graphical commands as the monitored terminal 32a and thus displays actions being performed on the monitored terminal 32a, allowing the user of the monitoring terminal 32b to visually observe the activity on the monitored terminal 32a. The monitoring terminal 32b may also receive presence information associated with the monitored terminal.

The remote monitoring system of Figure 2 could assume several different modes of operation. First, graphical commands could be sent simultaneously from the graphical proxy 34 to both the monitored terminal 32a and monitoring terminal 32b, such that the monitoring terminal 32b observes real-time operation of the monitored terminal 32a. Second, the graphical proxy 34 could store the graphical commands from a communication session, and optionally time-stamp the commands, such that an authorized observer could observe the communication session at a later time (or archive the communications sessions). Third, the graphical proxy 34 could send the graphical commands from a communication session to the monitoring terminal 34b in real-time, or near real-time, and the monitoring terminal could save the graphical commands for later playback.

The monitored terminal 32a could be identified by the user of the monitoring terminal 32b by IP address or a name mapped to the IP address, or the monitored terminal 32 could be a terminal currently being used by a particular user identified by the user of the monitoring terminal 32b.

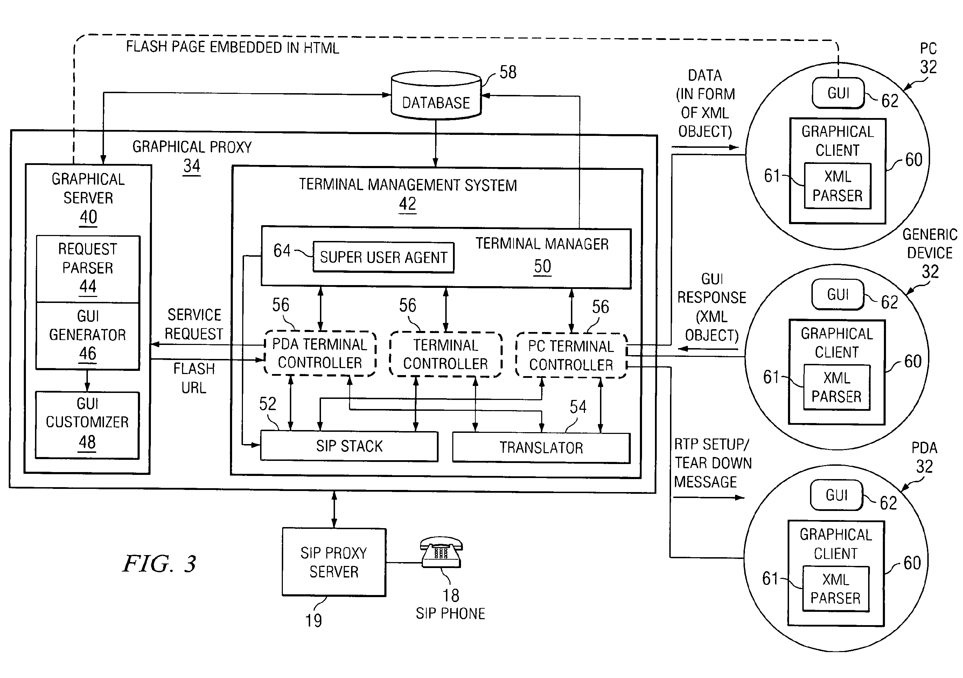

Figures 3-8 illustrate an embodiment of a graphical proxy which could be used to implement the monitoring capabilities shown in Figure 2. Other architectures could also be used.

Figure 3 illustrates a block diagram of a graphical proxy 34 which could be used to coordinate remote monitoring as described above. The graphical proxy 34 of Figure 3 preferably supports graphical terminals 32 that do not have a client communication stack, as described in detail in connection with U.S. Ser. No. 10/317,447, entitled, "GRAPHICAL PROXY FOR LESS CAPABLE TERMINALS" to Suhail et al filed December 12, 2002, which is incorporated by reference herein. The graphical proxy 34 includes two major functional blocks, a graphical server 40 and a terminal management system 42. The graphical server 40 includes a request parser 44, a GUI generator 46 and a GUI customizer 48. The terminal management system 42 includes a terminal manager 50, a SIP stack 52, a translator 54, and multiple instances of terminal controllers 56, where each instance of a terminal controller 56 is associated with a respective graphical terminal 32. The graphical server 40 and the terminal management system 42 are in communication with a database 58. For purposes of illustration, three graphical terminals are shown: a personal computer 32a, a generic processing device 32b and a PDA 32c. Each graphical terminal 32 includes graphical client software 60 and GUI software 62.

Any one of the graphical terminals 32 shown in Figure 3 could be either the monitored terminal 32a or the monitoring terminal 32b. The monitoring terminal 32b does not need to all the capabilities of a typical terminal 32, since it does not necessarily need to send or receive packetized data. The monitoring terminal 32b could be any general computing device, with or without audio input or output capabilities.

The terminal management system 42 is responsible for registering the associated graphical terminals 32 with the graphical proxy 34 and then registering on behalf of each associated graphical terminal 32 with the SIP Proxy 19. The terminal management system 42 handles the calls for each associated graphical terminal 32 and interacts with the graphical server 40 to provide a customized GUI for each graphical terminal 32 to display current call status.

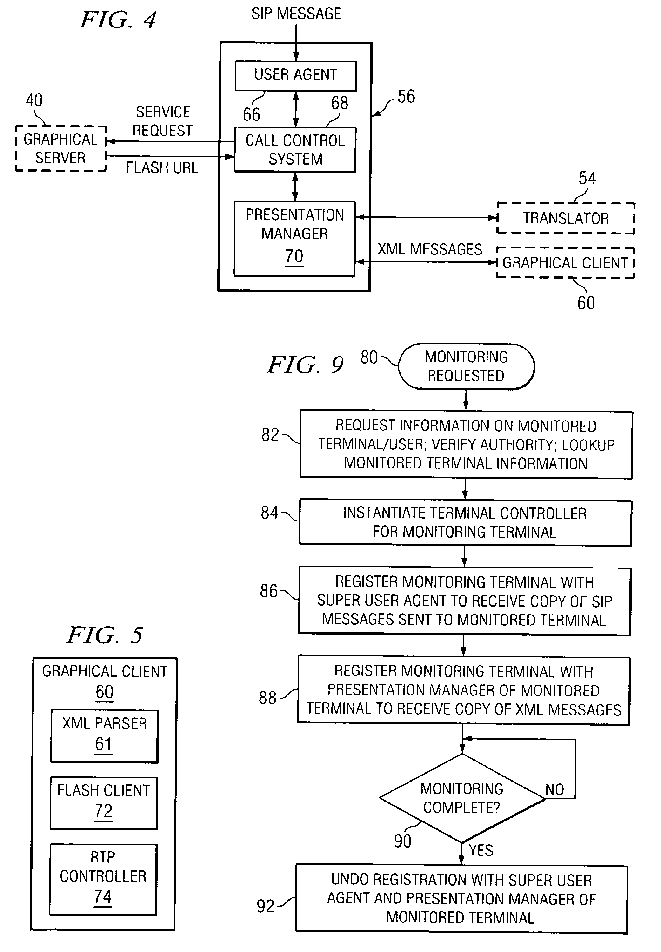

The terminal manager 50 manages all the associated graphical terminals 32. When a user starts the FLASH client on a graphical terminal 32, the graphical terminal establishes a connection with the terminal manager 50. The terminal manager 50 then instantiates a terminal controller 56 for that graphical terminal 32 and maintains the mapping between the graphical terminal 32 and the respective terminal controller 50. The terminal manager 50 implements a Super user agent 64, which receives requests for connection for all terminals 32, identifies which terminal is associated with the request, and then passes the request to the user agent 66 (see Figure 4) in the terminal controller 56 for the particular terminal. When a terminal 32 is being monitored, the Super User Agent 64 passes requests to the user agents 66 associated with both the monitored terminal 32a and the monitoring terminal 32b. The Super User Agent 64 is also responsible for registering each terminal 32 with the SIP Proxy server 19. To the SIP proxy server 19, the Super user agent 64 appears as the individual user agent for a terminal.

Figure 4 shows different components of the terminal controller 56 and their interaction with other components of the graphical proxy 34. There is one terminal controller 56 instantiated for each terminal 32. Each terminal controller 56 includes a user agent 66, a call control system 68 and a presentation manager 70. The User agent 66 receives and sends SIP messages on behalf of the associated graphical terminal 32 (while the present invention is described in connection with the SIP protocol, the user agents 66 could support any available protocol, such as H.323, MGCP, MEGACO, any protocol developed in the future, or multiple protocols). The user agent 66 processes SIP requests and response messages coming to the terminal 32 and provides relevant information to the call control system 68. For example, when the user agent 66 receives an INVITE message for its terminal 32, it processes that message and informs the call control system 68 that there is a request for connection or incoming call for its associated terminal 32 from Caller X and the desired media for communication. The user agent 66 also generates appropriate SIP requests and response messages based on the information it gets from the call control system 68 responsive to user responses.

By using a Super user agent 64 to receive and send SIP messages to the SIP proxy server 19, only a single port is needed to receive and send messages associated with all terminal controllers. If each user agent was separately registered on behalf of its associated graphical terminal 32, a separate port would required for each terminal controller.

The call control system 68 handles incoming and outgoing calls for its associated terminal 32 and manages all active calls. It gets information on the incoming messages from the user agent 66 and provides information on user responses back to the user agent. The call control system 68 also generates service requests and sends them to the graphical server 40 to get a URL (Uniform Resource Locator) for an appropriate FLASH page displaying the desired user interface screen.

For example, if there is an incoming call, the call control system 68 generates a request to "show incoming call". The graphical server 40 then returns the URL of the FLASH page with the display for an incoming call. The incoming call FLASH page may include multiple graphical elements, but will not include specific text relevant to the current call, such as the name of the caller. The call control system 68 assembles the URL and the data that has to be filled in the FLASH page such as the Callers and Callee's name in the form of XML message and passes it to the presentation manager 70. The FLASH client 60 on the associated terminal 32 has a built in XML parser 61; it loads the FLASH page from the given URL and fills the fields with the data provided in the XML message. The call control system 68 also receives GUI response messages from the terminal 32 through the presentation manager 70 and invokes the translator 54 to parse the XML messages and translate them to JAVA objects that can be used by the call control system 68. The call control system 68 also sends RTP setup and RTP tear down messages to the RTP controller 74 (See Figure 5) through FLASH on the terminal. RTP setup message is sent when the call setup is complete and the terminal has to set up RTP session with the remote party to start sending/receiving media. Similarly RTP tear down message is sent to the terminal if the user at the terminal or the remote party ends the call.

The presentation manager 70 manages the display of its associated terminal 32. The terminal 32 could support several "phone lines "; in other words a single terminal can handle more than one active call at a time. The presentation manager 70 maintains individual folders for different calls. The call control system 68 sends the graphical representation of call status for a particular call to the presentation manager 70. The presentation manager 70 decides where to display this graphical representation. In a preferred embodiment, the presentation manager 70 communicates with the graphical client 60 in FLASH through XML sockets. When the presentation manager 70 of a monitored terminal 32a receives an XML socket from the monitored terminal 32a, a copy of the XML socket is sent to the presentation manager 70 associated with the monitoring terminal 32b. In the preferred embodiment, for the monitored call, the presentation manager 70 associated with the monitoring terminal 32b does not receive XML messages from the monitoring terminal 32b; i.e., the user of the monitored terminal 32b cannot interact with the call activity. Further, the user agent 66 associated with the monitored terminal 32b does not send outgoing SIP messages for the monitored call.

Referring again to Figure 2, the translator 54 translates the GUI response messages (indicating user actions, such as pressing a button or icon) coming from the terminal 32 in XML format to JAVA objects and translates JAVA objects to XML messages that have to be sent to the terminal 32. This two way mapping between JAVA and XML may be done using JAVA Architecture for XML Binding (JAXB). JAXB compiles an XML schema into one or more JAVA technology classes. The combination of the schema derived classes and the binding framework enables to perform the following operations on an XML document:
**unmarshal** XML content into a JAVA representation. This JAVA representation can then be used by call control system to extract the information from the XML message;
**access, update** and **validate** the JAVA representation against schema constraint;
**marshal** the JAVA representation of the XML content into XML content. This is used by the call control system to generate XML messages that are sent to the user terminal.

The graphical server 40 generates the GUI for the terminals 32. For each associated terminal 32, the graphical server queries the database 58 to get the display capabilities of the terminal, such as size of the screen, depth of color etc. These capabilities are provided to the terminal manager 50 by the terminal 32 at the time of registration and stored in the database 58. When the graphical server 40 receives a request for a GUI, it customizes the GUI to the capabilities of the particular terminal. The graphical server 40 includes a GUI generator 46 and a GUI customizer 48.

The GUI generator 46 stores a stack of static FLASH pages. The request parser 44 parses the service requests coming from the terminal controllers 56. Based on the particular service request, the GUI generator returns an appropriate FLASH page URL to the requesting terminal controller 56.

The GUI customizer 48 customizes a selected FLASH page based on the capabilities of the particular graphical terminal 32.

The graphical proxy 34 uses the database 58 (which could be part of the graphical proxy 34 or a separate device) to store user related information. The information stored in the database 58 includes: (1) user name and password of registered users, (2) current IP address of active registered users; (3) display capabilities of different terminals such as size of the screen color depth, etc., (4) media features that the user would like to use for communication with the remote party and (5) telephony features that the user has subscribed to such as Call Forwarding, Conferencing, Breakout room etc.

A graphical client application 60 runs on each terminal 32. Figure 5 illustrates a block diagram of the graphical client 60. In additions to the XML parser 61, the graphical client 60 includes: (1) A FLASH client 72 to establish a TCP/IP connection with the graphical proxy 34 and for loading the login FLASH page from the graphical server 40 and (2) an RTP controller 74 responsible for setting up and tearing down the RTP session between the terminal 32 connected to the graphical proxy 34 and the remote party terminal. The RTP session has to be set up by the terminal because media does not go through the graphical proxy. Since the call set-up and tear down is controlled by the graphical proxy 34, the graphical proxy sends messages to the RTP controller 72 on the terminal 32 regarding when to set up and break down the RTP session along with the required parameters.

The architecture described in connection with Figures 1-4 allows "dumb" terminals to act as VOIP phones, such as SIP phones or H.323 phones; the graphical proxy 34 only needs to support the underlying signaling protocol. The graphical proxy 34 can be updated to support new protocols without the need to update the terminals 32.

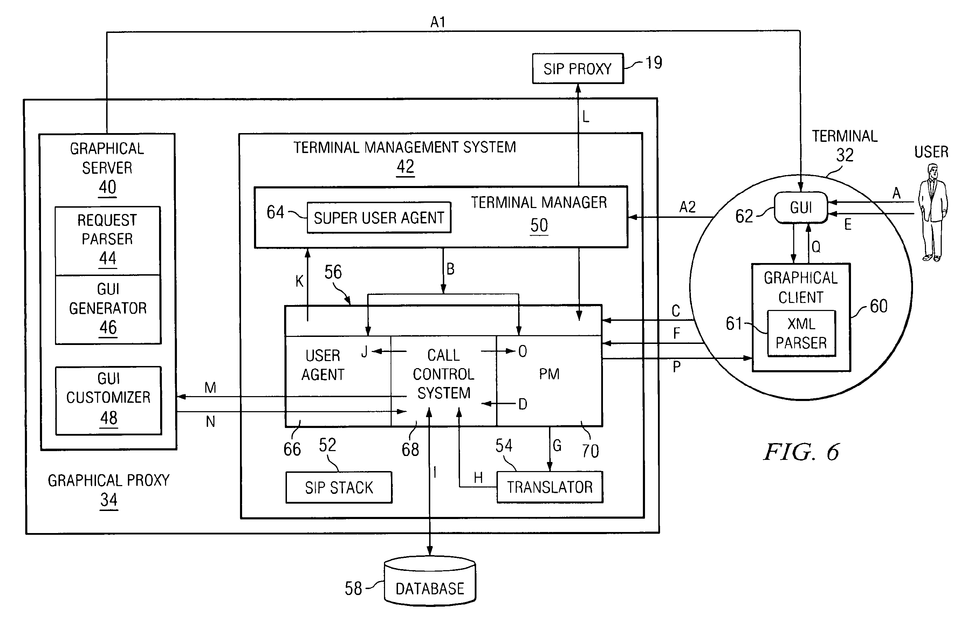

As an illustration of the operation of the network 8, Figure 6 illustrates the steps for registration/log-in. The steps include:
**A.** User initiates the FLASH client 72 on the terminal.
   **A1.** FLASH client 72 establishes an HTTP (Hyper Text Transfer Protocol) connection with the graphical server 40 and downloads the initial FLASH page that allows the user to Register/Login.
   **A2.** FLASH client 72 sets up a TCP/IP connection with the terminal manager 50.
**B**. Terminal manager 50 instantiates presentation manager (PM) 70 and user agent 66 for the terminal and passes the connection reference of the user agent 66 to the presentation manager 70.
**C**.The TCP/IP connection is passed from the terminal manager 50 to the presentation manager 70 and now the FLASH client 72 directly communicates with the presentation manager 70.
**D**. Presentation manager 70 instantiates the call control system (CCS) 68.
**E**. The user either registers or if he or she has already registered enters his or her username and password.
**F**. This registration/login information is sent to the presentation manager 70 in XML format.
**G**. The presentation manager 70 invokes the translator 54 to parse the registration/login information.
**H**. The call control system 68 gets the extracted information from the translator 54.
**I.** If the information is pertaining to registration information call control system 68 stores this information in the database 58 else, if the user is logging in, call control system 68 accesses the database to authenticate the user.
**J**. Call control system 68 passes username to the user agent 66.
**K.** Call control system 68 passes username and user agent 66 reference to Super user agent 64.
**L**. If the user is registering, Super user agent 64 creates a REGISTER message on behalf of the user and sends it to the SIP Proxy 19. This completes the registration of the user with the SIP Proxy19.
**M**. Call control system 68 generates a service request to the graphical server 40 for the main FLASH page that can allow the user to make and receive calls.
**N**. The graphical server 40 returns the URL of this FLASH page.
**O.** Call control system 68 passes the URL in XML format to the presentation manager 70.
**P.** Presentation manager 70 passes the URL to the FLASH client 72.
**Q.** The built-in XML parser in FLASH parses the XML message and loads the page from the given URL.

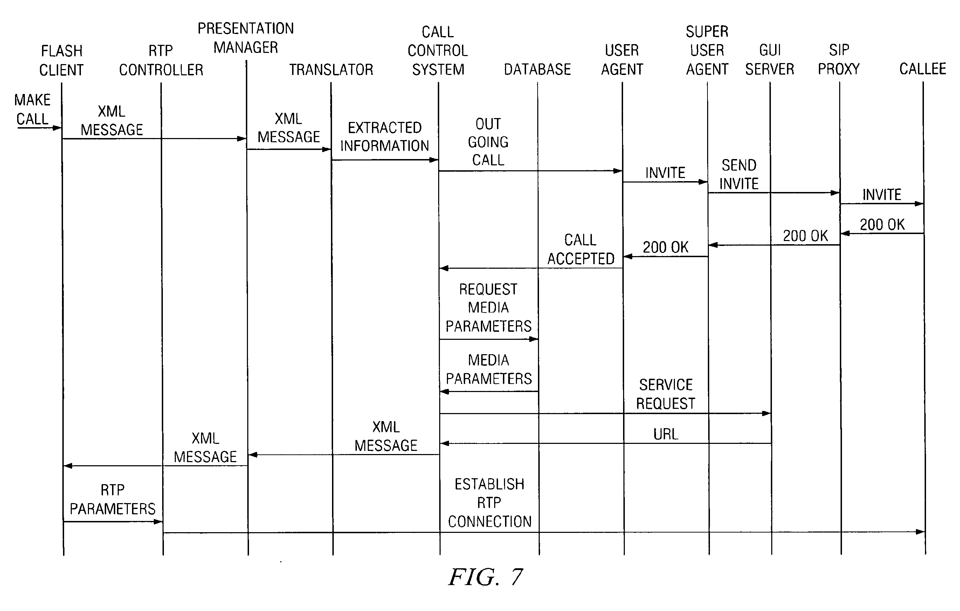

Figure 7 illustrates a call flow for an outgoing call from a terminal 32.

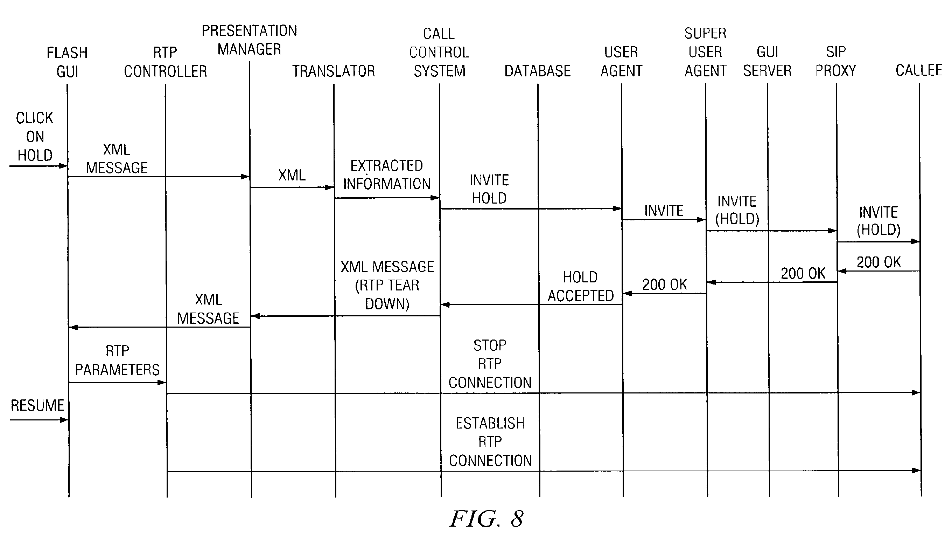

Figure 8 illustrate a call flow for putting a caller on hold. For purposes of illustration, the call flow associated with the "resume" action (by the user) and the "establish RTP connection" signal are not shown; this call flow would be similar to that shown between the initial "click on hold" action and the "stop RTP connection" signal.

Figure 9 illustrates a flow chart describing operation of the block diagram of Figure 3 in a monitoring mode. In step 80, a user requests monitoring activity on another terminal or user. In step 82, the graphical proxy requests information identifying the terminal/user to be monitored. This information is used to search database 58 to identify the address of the monitored terminal 32a and to verify that the user of the monitoring terminal has authorization to monitor the activity of the terminal/user.

In step 84 (assuming the monitoring is authorized), a terminal controller 56 is instantiated for the monitoring terminal 32b. In step 86, the monitoring terminal 32b is registered with the Super User Agent 64 to identify the monitoring terminal 32b as a recipient of copies of SIP messages sent to the monitored terminal 32a. In step 88, the monitoring terminal 32b is registered with the presentation manager 70 of the monitored terminal 32a to receive copies of XML objects from the monitored terminal 32a. At this point, the monitoring terminal 32b will have a display that mirrors the actions on the interface of the monitored terminal 32a. Since the monitoring terminal 32b has its own terminal controller 56, however, the display will be optimized for the capabilities of the monitoring terminal 32b. For convenience, the monitoring station 32b may provide a notification when the monitored station receives or initiates a call.

If multiple calls are being monitored, each call will have a separate folder in the presentation manager 70 of the monitoring station 72.

While the invention has been discussed in connection with monitoring a telecommunication device with an graphic display controlled by a graphical proxy 34, by providing a remote monitoring application at the softswitch 24, user actions in connection with an ordinary phone, or a phone with an internally-controlled graphic display could be forwarded to the graphical proxy 34, which would pass this information to the terminal controller associated with the monitoring terminal 32b.

Further, with additional modifications at the softswitch 24, the monitoring station 32b could be allowed to bridge into a communication session established by a monitored terminal 32a, i.e., the monitoring terminal 32a could receive voice packets as well has display information. Alternatively, the recording of the conversation could be done in the monitored terminal 32a in an audio file, such as a .WAV or .MP3 file; and this file could be transmitted to the monitoring terminal 32b upon completion of the conversation, or intermittently during the conversation (to avoid detection). The program for recording and transmitting the conversation could be initiated by the graphical proxy 34.

In the event that the activity on the monitored terminal 32b is being archived for later display, the SIP messages and XML objects sent to the terminal controller 56 of the monitored terminal 32a can be time stamped and stored in a file. Alternatively, the XML objects received by the monitoring terminal 32b can be time stamped and stored in a file on the monitoring terminal 32b.

In addition to monitoring interaction of the graphical interface for telephonic conversations, the monitoring terminal could also perform presence monitoring. In presence monitoring, the monitoring terminal 32b can receive information on the identity of any persons using the monitoring terminal 32a and the times of such use, how the monitoring terminal is used (i.e., what programs were used), and the identities of parties in communication with the monitoring terminal 32a, including web sites, new groups, other data networks, intermediate sites providing communication between two users, and other persons. The presence information can be transferred to the monitoring terminal 32b via the graphical proxy 34. The monitoring terminal 32b could use the presence information, for example, to indicate whether a co-worker is in his/her office, in a telephonic conversation, or otherwise occupied.

The following features or combinations of features may also constitute embodiments of the described or claimed invention:
- The described or claimed method further comprises the step of storing the voice signals in an audio file;
- The described or claimed method further comprises the step of displaying user actions on the monitoring terminal in real-time;
- The described or claimed method further comprises the step of storing graphical commands indicative of action taken on the monitored terminal in a file;
- The described or claimed method further comprises the step of time-stamping graphical commands indicative of action taken on the monitored terminal;
- The described or claimed method further comprises the step of sending presence information from the monitored terminal to the graphical proxy server;
- The described or claimed method further comprises the step of receiving presence information from the graphical proxy server in the monitoring terminal.

While the preferred embodiment of the invention has been discussed using specific languages and protocols, it would be known to one skilled in the art that alternative languages, application development tools, and protocols could be used in their place for a given implementation. For example, JAVA could be replaced in whole or part by C++ or similar programming environment and SIP could be replaced by H.323.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A communications system, comprising:
a data network;
a monitored terminal coupled to the network for communicating by sending and receiving data over the network;
a monitoring terminal for monitoring user activity on the monitored terminal;
a graphical proxy server in communication with the monitored terminal and with the monitoring terminal for:
sending graphical commands to implement a graphical interface on the monitored terminal;
sending graphical commands to the monitoring terminal indicative of actions taken on the monitored terminal.

2. The communications system of claim 1 wherein the monitored terminal communicates voice signals over the data network using packetized data.

3. The communications system of claim 2 wherein the voice signals are also stored in an audio file.

4. The communications system of claim 1 wherein user actions on the monitored terminal are displayed on the monitoring terminal in real-time.

5. The communications system of claim 1 wherein the graphical commands indicative of action taken on the monitored terminal are stored in a file.

6. The communications system of claim 5 wherein the graphical commands indicative of action taken on the monitored terminal are time stamped.

7. The communications system of claim 1 wherein presence information is sent from the monitored terminal to the graphical proxy server.

8. The communications system of claim 7 wherein the monitoring terminal receives presence information from the graphical proxy server.

9. A method of communicating over a data network, comprising the steps of:
sending graphical commands from a graphical proxy server coupled to the data network to implement a graphical interface on a monitored terminal coupled to the data network;
sending graphical commands to a monitoring terminal coupled to the data network, where the graphical commands are indicative of actions taken on the monitored terminal.

10. The method of claim 9 and further comprising the step of communicating voice signals from the monitored terminal over the data network using packetized data.
